# EUROPEAN PATENT APPLICATION

(11) **EP 1 413 882 A1**
(43) Date of publication of application: **28.04.2004**
(21) Application number: 03023901.6
(22) Date of filing: 21.10.2003
(51) Int. Cl.: G01N 30/48

(54) **Carrier for chromatography, carrier for pre-treatment and kit for preparing the same**

(30) Priority: 21.10.2002 JP 2002305625
(71) Applicant: Shinwa Chemical Industries, Ltd., Kyoto-Shi, Kyoto-fu 612-8307 (JP)
(72) Inventor: Kanehara, Hideyuki, Fushimi-ku Kyoto-shi Kyoto-fu 612-8307 (JP); Wada, Hiroo, Fushimi-ku Kyoto-shi Kyoto-fu 612-8307 (JP)
(74) Representative: VOSSIUS & PARTNER

(57) **Abstract**

The invention provides a carrier or a pre-treating carrier for use in chromatography which comprises a carrier material consisting essentially of a metal compound, capable of reacting with a carboxylic acid compound or a carrier material whose surface is coated with the metal compound and a carboxylic acid compound linked to the surface of the carrier material; and a kit for the preparation of the foregoing carrier for chromatography or pre-treating carrier which comprises the foregoing carrier material and the carboxylic acid compound to be linked to the surface of the carrier material. The use of the carrier for chromatography or pre-treating carrier would permit the achievement of a variety of excellent effects. For instance, the hydrophobic separation field established by, for instance, the octadecyl groups is never eliminated even under weak acidic or alkaline conditions, which leads to long service life.

## Description

The present invention relates to a carrier or a carrier for pre-treatment (hereunder also referred to as "a pre-treating carrier") usable in the chromatography and more particularly, to a carrier or a carrier for pre-treatment usable in the chromatography, which comprises a carrier material whose surface is coated with a metal compound such as aluminum oxide or silver oxide or a carrier material consisting essentially of a metal compound such as aluminum oxide or silver oxide and a carboxylic acid compound linked to the surface of the carrier material as well as a kit for the preparation of the carrier and the pre-treating carrier for use in chromatography. According to the present application (1) the term "a carrier" means a packing material, or an adsorbent, and (2) the term "carrier material" means a substance constituting the carrier or an unmodified packing material or adsorbent.

The conventional carrier and pre-treating carrier usable in the chromatography techniques are those obtained by chemically linking, for instance, monochlorodimethyloctadecylsilane to, for instance, porous silica particles through functional groups on the surface of the silica particles such as hydroxyl groups. The bonds formed through this reaction are decomposed by the action of an alkaline eluting solution and the octadecyl groups, which play a quite important role in the establishment of the separation fields on the carrier surface, are thus easily released from the carrier surface. For this reason, it is difficult to use an alkaline solution having a pH value of not less than 8 as an eluting solution.

Accordingly, when using an eluting solution having a pH value of not less than 8, a cross-linked polymeric compound has, for instance, been used as a material for preparing such a carrier. However, such a polymeric material is expensive and inferior in the separation power as compared with the silica type carrier for chromatography.

When bonding, for instance, octadecyl groups to hydroxyl groups present on silica particles according to the conventional synthetic method, the residual silanol groups free of any octadecyl group linked thereto amount to 50% of the total functional groups present on silica particles, in the worst case. The residual silanol groups often adversely affects the separation power of the resulting chromatograph packed with such a carrier and therefore, it is common that the silica carrier is subjected to the so-called end-capping treatment, which comprises the step of treating the carrier with, for instance, trimethylchlorosilane to thus eliminate the residual silanol groups. However, it is quite difficult to completely remove the residual silanol groups because of, for instance, a high degree of steric hindrance.

As has been discussed above, conventional carriers and pre-treating carriers used in the chromatography technique suffer from such drawbacks that expensive reagents such as monochlorodimethyloctadecyl-silane and trimethylchlorosilane are used when chemically linking, for instance, monochlorodimethyloctadecylsilane to porous silica particles through functional groups present on the surface of the silica such as hydroxyl groups. Furthermore, the preparation thereof requires the use of organic solvents such as toluene, which may apply a high load to the environment and said carriers are synthesized according to a quite expensive process using a high temperature and a long period of time. Moreover, it is essential to use a dehydration step in the reaction for preparing the same and the reaction requires the use of a number of special devices.

In most of the conventional carriers and pre-treating carriers used in the chromatography, porous silica has often and mainly been used as a carrier material and therefore, these carriers would undergo decomposition of silica under acidic or alkaline conditions. This correspondingly leads to the reduction of the separation power and the service life thereof as a carrier for chromatography as well as the quality thereof as a pre-treating carrier such as adsorption ability and the desalting ability.

In the conventional carrier and pre-treating carrier used in the chromatography, in which porous silica is used as the carrier material, a hydrophobic compound such as monochlorodimethyloctadecylsilane is chemically linked to hydroxyl groups present on the surface of the silica. The Si-O-Si linkage is decomposed under alkaline conditions and as a result, the hydrophobic separation environment or separation field established by, for instance, the octadecyl groups linked to the silica surface is eliminated from the silica surface and this in turn results in the deterioration of the separation power or resolution of the resulting carrier. Accordingly, it is an object of the present invention to develop a carrier or a pre-treating carrier for chromatography, in which the hydrophobic separation environment or separation field established by, for instance, the octadecyl groups is never eliminated even under acidic or alkaline conditions, which may possibly be used in chromatography procedures.

The conventional carrier and pre-treating carrier used in the chromatography, in which porous silica is used as the carrier material, suffers from such problems that they are decomposed under alkaline conditions, that the separation and adsorption abilities thereof are correspondingly deteriorated and that the service life thereof as a carrier is greatly reduced. Accordingly, it is also an object of the present invention to solve these problems.

To solve the problems originated from the residual silanol groups, the carrier has been treated with, for instance, trichlorosilane or it has been subjected to the end-capping treatment in the conventional technique. This end-capping treatment would permit the preparation of a high quality carrier for chromatography, but this treatment may require a number of additional steps and accordingly, this leads to an increase in the price of the final product. Moreover, in many cases, a part of the silanol groups still remain un-capped as residual silanol groups even after the end-capping treatment due to a variety of factors including steric hindrance. Accordingly, it is also an object of the present invention to solve these problems.

In conventional techniques, the formation of a hydrophobic separation environment or separation field using, for instance, monochlorodimethyloctadecylsilane and the end-capping treatment are conducted under severe conditions such as 110°C for not less than 5 hours using an organic solvent such as dehydrated toluene. Such a synthetic method requires the use of expensive reagents, an organic solvent, which applies a high load to the environment. Furthermore, it requires great expense for the abandonment of the organic solvent and the use of severe synthetic conditions such as a high temperature and a long reaction time and accordingly, the price of the final product is greatly increased. Accordingly, it is an object of the present invention to solve these problems or to develop a method for preparing a carrier using inexpensive reagents and milder reaction conditions such as a temperature in the order of room temperature and a short reaction time.

Conventional carriers for chromatography and pre-treating carriers are packed in a column after linking, for instance, octadecyl groups to silica particles. This method is quite inefficient since one should start with the preparation of the carrier when it is necessary to use the carrier. Accordingly, it is likewise an object of the present invention to solve this problem.

According to the present invention it has been found that the foregoing problems can efficiently be solved by providing a carrier or a pre-treating carrier for chromatography, which comprises a carrier material whose surface is coated with a metal compound or a carrier material consisting essentially of a metal compound and a carboxylic acid compound linked to the surface of the carrier material through the reaction therebetween.

According to an aspect of the present invention, there is provided a carrier or a pre-treating carrier for use in chromatography, which comprises a carrier material consisting essentially of a metal compound, capable of reacting with a carboxylic acid compound or a carrier material whose surface is coated with the metal compound and a carboxylic acid compound linked to the surface of the carrier material.

According to another aspect of the present invention, there is provided a kit for the preparation of the carrier and the pre-treating carrier for chromatography, which comprises a carrier material consisting essentially of a metal compound, capable of reacting with a carboxylic acid compound or a carrier material whose surface is coated with the metal compound and the carboxylic acid compound to be linked to the surface of the carrier material.

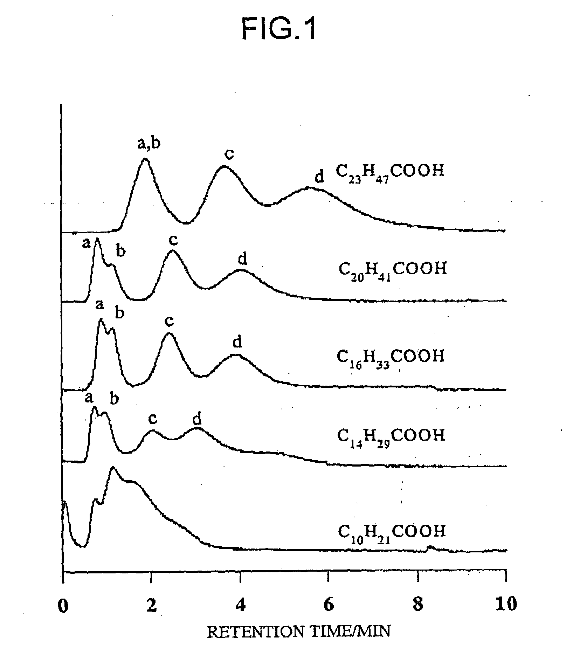

Fig. 1 shows chromatograms observed when a sample containing uracil (a), benzene (b), naphthalene (c) and diphenyl (d) was subjected to a chromatography separation using columns packed with alumina carriers modified with a variety of carboxylic acid compounds.

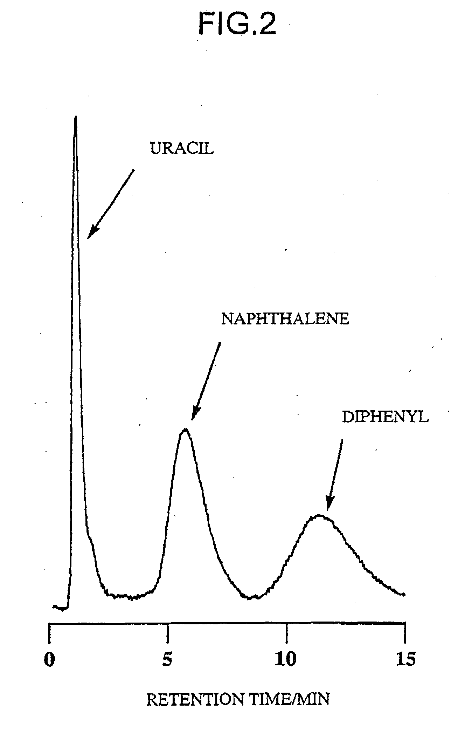

Fig. 2 shows a chromatogram observed when a sample containing uracil, naphthalene and diphenyl was subjected to a chromatography separation using a column packed with an alumina carrier modified through the reaction thereof with a mixed carboxylic acid comprising tricosanoic acid and palmitic acid in a mixing ratio of 1:3.

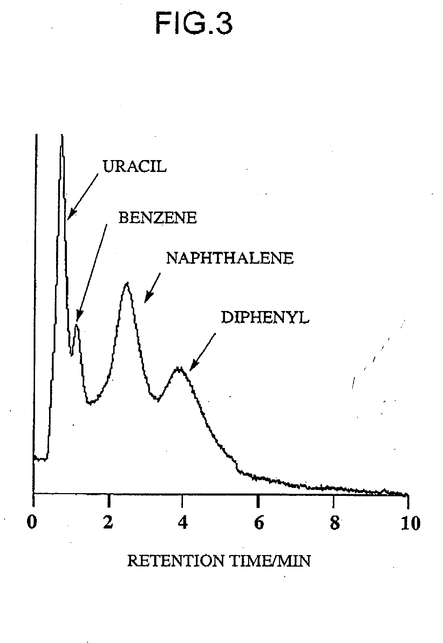

Fig. 3 shows a chromatogram observed when a sample containing uracil, benzene, naphthalene and diphenyl was subjected to a chromatography separation using a column obtained by packing it with an alumina carrier material and then reacting the carrier material with palmitic acid.

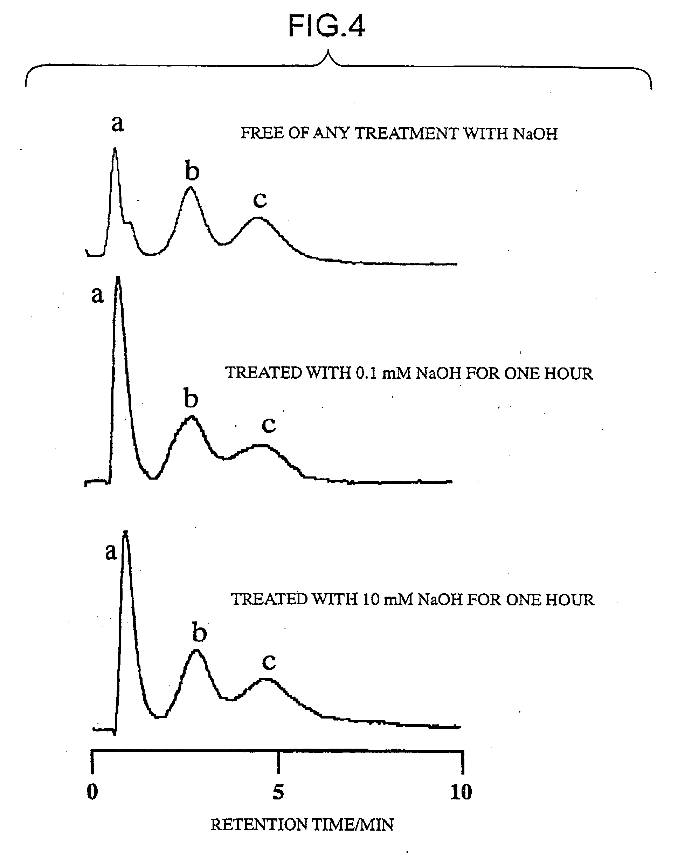

Fig. 4 shows chromatograms observed when a sample containing uracil (a), naphthalene (b) and diphenyl (c) was subjected to chromatography a separation using a column packed with an alumina carrier, which had been reacted with stearic acid, and columns prepared by variously treating the alumina carrier with an alkali and then packing these columns with the resulting alumina carriers.

The material for preparing the carrier for chromatography or pre-treating carrier, which can be employed in the present invention, is not restricted to any particular one inasmuch as it may be used in the chromatography. There may be listed, for instance, commonly used carrier materials such as silica, porous silica, glass, cellulose, ceramics, carbon and porous cross-linked polymeric compounds (such as styrene-divinyl benzene copolymer and polymethacrylate) and metal oxides such as aluminum oxide and silver oxide. The shape of the carrier material is not likewise limited to any particular one and the carrier material may have any shape such as a fibrous, spherical or crushed piece-like (or fragment-like) shape. When it has a fibrous shape, the diameter thereof suitably ranges from about 1 nm to about 1 mm. In case of spherical or crushed piece-like carrier materials, the particle size thereof suitably ranges from about 1 nm to about 1 mm. In addition, it is also possible to use the inner walls of fine capillaries and the inner walls of capillaries within microchips.

When using carrier materials other than the metal compounds reactive with the carboxylic acid compounds, the surface of such a carrier material is coated with a metal compound reactive with a carboxylic acid compound. The method for coating such a carrier material with such a metal compound is not restricted to any particular one. The method can appropriately be selected from the group consisting of a chemical vapor deposition (CVD) technique, a sputter-coating technique, an electrical coating or deposition method and sol-gel process. The amount of the metal compound to be coated and the thickness thereof are not restricted to specific ranges inasmuch as the resulting monolayer of the metal compound can show sufficient characteristic properties as the carrier for chromatography or pre-treating carrier and they desirably fall within the ranges of from about 1 mg/m² to about 2000 g/m² and about 0.05 nm to about 10µm, respectively.

The carboxylic acid compounds usable herein are not restricted to particular ones insofar as they can form linkages with the foregoing metal compounds. Preferably, they are fatty acids, which may be saturated or unsaturated ones and which may have linear or branched structures. The carboxylic acid compound is particularly preferably a fatty acid having 1 to 40 carbon atoms and specific examples thereof preferably used herein are palmitic acid and stearic acid.

Moreover, the carboxylic acid compound used in the present invention may have one or at least two kinds of functional groups selected from, for instance, hydroxyl, carboxyl and amino groups. The carboxylic acid compound may have one or at least two functional groups. These functional groups may appropriately be selected depending on characteristic properties to be imparted to each particular carrier for chromatography or pre-treating carrier.

The solvent used for dissolving the carboxylic acid compound may be any one capable of dissolving the same and specific examples thereof usable herein are acetone, chloroform, acetonitrile, methanol and ethanol. Preferred are ethanol and acetone when using a fatty acid having not more than 18 carbon atoms as the carboxylic acid compound; and chloroform when using a fatty acid having not less than 19 carbon atoms as the carboxylic acid compound.

The reaction of such a carboxylic acid compound with a carrier material is carried out by, for instance, dissolving the carboxylic acid compound in the foregoing solvent to thus prepare a solution of the compound having a concentration ranging from 0.01 to 10% by mass, dispersing a carrier material in the solution, stirring the resulting mixture, removing the unreacted carboxylic acid compound from the mixture and then drying the mixture.

The characteristic properties of the present invention will hereunder be described in detail.

The present invention does not use the silica carrier material, per se, commonly used in the conventional technique without any pretreatment, but uses such a silica carrier material, which is subjected to a specific treatment discussed above. Therefore, the carrier material used in the present invention never suffers from any problem concerning the residual silanol groups, which constitute a serious problem in conventional carriers for chromatography. In addition, the carrier material used in the present invention never requires the use of any end-capping treatment, because of the carrier material is substantially free of any residual silanol groups.

The separation environment or separation fields established by, for instance, octadecyl groups is formed on such a carrier material while making use of the reaction of a carboxylic acid compound having octadecyl group with a metal compound such as aluminum oxide or silver oxide. This reaction is identical to that utilized in the general method for forming a self-assembled monolayer. The self-assembled monolayer is quite stable and strong monolayer since the carboxyl groups of the carboxylic acid compound are directly linked with a metal compound and simultaneously the monolayer is stabilized due to the hydrophobic interaction between alkyl chains.

The inventors of this invention have supposed that a quite stable and strong carrier for chromatography or pre-treating carrier, which have never been known conventionally, may be prepared by applying such a method for the preparation of a strong self-assembled monolayer of this type to the formation of separation environments or separation fields on the carrier for chromatography or pre-treating carrier and the inventors have made use of the reaction of a metal compound and a carboxylic acid compound based on the foregoing idea. As a result, the inventors have found that the resulting carrier for chromatography or pre-treating carrier permits the solution of the foregoing problems associated with conventional carriers for chromatography or pre-treating carriers.

The reagent such as monochlorodimethyloctadecylsilane used in the synthesis of a carrier for the reversed phase chromatography is quite expensive. The present invention uses a quite inexpensive compound or a carboxylic acid compound as a material for forming the desired separation environment or separation field in order to solve the foregoing problems. Moreover, a solvent such as dehydrated toluene is used in the synthesis of a carrier according to the conventional technique and such a solvent applies a quite high load to the environment when the solvent is abandoned. Contrary to this, the present invention mainly uses ethanol or acetone as a solvent for the reaction of a carboxylic acid compound and a metal compound to form a reaction product thereof and therefore, the foregoing problem of the environmental load encountered when the solvent is abandoned can efficiently be solved by the present invention.

Moreover, the conventional method for the synthesis of a carrier or the linkage of the separation environment or separation field to silica using, for instance, monochlorodimethyloctadecylsilane must be conducted under dehydration conditions since the foregoing silane compound would undergo decomposition in the presence of water. On the other hand, the method for the formation of the separation environment or separation field on the carrier used in the present invention is not influenced very much by the presence of water. Therefore, the method of the present invention does not need to be conducted under severe dehydration conditions and this makes the synthesis of the carrier simpler.

With respect to the formation of a self-assembled monolayer using a carboxylic acid compound, the use of at least two kinds of carboxylic acid compounds would permit the formation of a self-assembled monolayer having a nano-size surface structure. According to the present invention, the simultaneous use of at least two kinds of carboxylic acid compounds would permit specific separation, which cannot be accomplished by the use of only one kind of carboxylic acid compound at all. For instance, the simultaneous use of octanoic acid and 8-hydroxy-1-octanoic acid as such carboxylic acid compounds makes it possible to freely control the polarity of the resulting carrier.

According to the present invention, it is also possible that a carrier material consisting essentially of a metal compound or that coated with such a metal compound is packed in a column in advance and that desired kinds of carboxylic acid compounds are then passed through the column at a desired instance to thus react the carboxylic acid compounds with the metal compound in the column. This is because the reaction of the carboxylic acid with the metal compound used in the present invention rapidly proceeds at room temperature and the reaction does not require the use of any specific device at all. This would significantly improve the packing efficiency of the carrier and an optimum carrier can be prepared at the job site by appropriately selecting the carboxylic acid compounds for each purpose.

In the present invention, the term "chromatography (technique)" used means liquid chromatography such as reversed phase liquid chromatography, normal phase liquid chromatography, anion-exchange chromatography, cation-exchange chromatography and ion pair chromatography; affinity chromatography, electrophoresis, gas chromatography; and thin-layer chromatography. Various kinds of such carrier for chromatography can be prepared by changing the kind of the carboxylic acid compound to be used and/or appropriately selecting the carboxylic acid compounds to be combined and the mixing ratio of the combined carboxylic acid compounds.

In the present invention, the term "pre-treating or pre-treatment" means adsorption, desorption and/or concentration of a subject material as well as removal of unnecessary substances and desalting.

As has been described above in detail, the carrier for chromatography of the present invention is substantially free of any residual silanol group, which may cause the tailing phenomenon of separation peaks, since a carrier material consisting essentially of a metal compound or a carrier material coated with a metal compound is used as a carrier material for chromatography. Accordingly, it is possible to obtain a sharp separation peak free of any tailing when using the carrier for chromatography of the present invention.

Moreover, the method for the preparation of a carrier and a pre-treating carrier for chromatography according to the present invention does not require the use of any severe reaction conditions such as the use of a hydrating organic solvent for the separation layer-forming reaction such as the formation of an octadecyl derivative, as well as the use of a high reaction temperature and a long period of reaction time and the method permits the use of acetone and/or chloroform as a reaction solvent. Thus, the method of the present invention permits the preparation of a carrier for chromatography and a pre-treating carrier, which is subjected to a treatment such as that for the formation of an octadecyl derivative under moderate reaction conditions such as the use of room temperature as the reaction temperature and a short reaction time in order to introduce the desired separation layer into the carriers.

Moreover, the resulting carrier for chromatography and pre-treating carrier are substantially free of any residual silanol group. Accordingly, the method of the invention leads to the elimination of any end-capping treatment for the removal of such residual silanol groups and the use of any organic solvent required for the end-capping treatment. This in turn results in the reduction of the load possibly applied to the environment and the considerable reduction of the time required for the preparation of the carrier for chromatography or pre-treating carrier.

In case of the carrier for reversed phase chromatography and the pre-treating carrier packed with a reversed phase packing material, stearic acid is most commonly used as the carboxylic acid compound, but a variety of carriers for chromatography and pre-treating carriers can be prepared depending on various purposes and applications by the use of carboxylic acid compounds appropriately selected from the group consisting of those having different chain lengths, those having branched chains and those having other functional groups in addition to carboxyl groups.

Furthermore, in case of a carboxylic acid compound having a functional group in addition to a carboxyl group, it would be easy that the functional group is linked to, for instance, a protein in order to apply the resulting product to, for instance, affinity chromatography.

In addition, one can easily integrate a chromatography on a microchip if the inner wall of a capillary within the microchip is covered with a thin layer of a metal compound and then the thin layer is reacted with a carboxylic acid compound.

When using a carboxylic acid compound in the preparation of a self-assembled monolayer, the use of at least two different carboxylic acid compounds permits the formation of a monolayer having a unique surface structure having a size on the order of nano level. In the present invention, a self-assembled monolayer having a unique surface structure is likewise formed through the use of at least two carboxylic acid compounds to thus obtain a carrier having unique separation quality, which has never been known.

According to the method of the present invention, it is possible that a carrier material consisting essentially of a metal compound or that coated with a metal compound is packed in a column in advance and that desired kinds of carboxylic acid compounds are then passed through the column at a desired instance to react the carboxylic acid compounds with the carrier material in the column and to thus prepare the carriers for chromatography and pre-treating carriers at the job site. In other words, the method of the present invention permits the preparation of various kinds of carriers in small quantities at high efficiency.

The present invention will hereunder be described in more detail with reference to the following Examples.

### Example 1

A fatty acid (tricosanoic acid, arachic acid, stearic acid, palmitic acid, myristic acid, capric acid; 5 × 10⁻⁴ moles each) was dissolved in 10 mL of acetone. The resulting solution was admixed with 1.5 g of an alumina carrier material (a size of 300 mesh, a particle size of about 45µm) and the resulting mixture was stirred at room temperature for 3 hours. After the completion of the reaction, the carrier material thus reacted was washed several times with acetone.

After drying the foregoing alumina carrier material modified with the fatty acid, about 0.7 g of the carrier material was packed in a column having a length of 5 cm and an inner diameter of 4.6 mm. The packing pressure adopted was 100 kgf/cm² under constant pressure mode and the packing solvent used was 120mL of water. After the completion of the packing, the column was washed by passing methanol as an eluting solution for 10 minutes at a flow rate of 1 mL/min, the column thus washed was fitted to a high performance liquid chromatography device LC-9A (available from Shimadzu Corporation, Kyoto, Japan) equipped with an ultraviolet-visible spectrophotometric detector SPD-6AV (available from Shimadzu Corporation, Kyoto, Japan), a 50% methanol solution containing uracil, benzene, naphthalene and diphenyl as a sample was loaded to the column, followed by the elution thereof with a 60% methanol-water as an eluting solution passed through the column at a flow rate of 1 mL/min and the detection at a detection wavelength of 254 nm. As has been shown in Fig. 1, the sample was separated into 4 peaks. Separately, an alumina carrier was prepared without treating the same with a fatty acid and the same sample used above was likewise analyzed according to the same procedures used above except for using the alumina carrier prepared above. As a result, it was found that only one peak was observed.

### Example 2

There were dissolved, in 10 mL of acetone, 1.25 × 10⁻⁴ moles of tricosanoic acid and 3.75×10⁻⁴ moles of palmitic acid. The resulting solution was admixed with 1.5 g of an alumina carrier material (a size of 300 mesh, a particle size of about 45µm) and the resulting mixture was stirred at room temperature for 3 hours. After the completion of the reaction, the carrier material thus reacted was washed several times with acetone. After drying the foregoing alumina carrier material modified with the fatty acid, about 0.7 g of the carrier material was packed in a column having a length of 5 cm and an inner diameter of 4.6 mm . The packing pressure adopted was 100 kgf/cm² under constant pressure mode and the packing solvent used was 120mL of water. After the completion of the packing, the column was washed by passing methanol as an eluting solution for 10 minutes at a flow rate of 1 mL/min, the column thus washed was fitted to a high performance liquid chromatography device LC-9A equipped with an ultraviolet-visible spectrophotometric detector SPD-6AV, a 50% methanol solution containing uracil, naphthalene and diphenyl as a sample was loaded to the column, followed by the elution thereof with a 50% methanol-water as an eluting solution passed through the column at a flow rate of 1 mL/min and the detection at a detection wavelength of 254 nm. As has been shown in Fig. 2, the sample was separated into 3 peaks. Separately, an alumina carrier was prepared without treating the same with the fatty acid and the same sample used above was likewise analyzed according to the same procedures used above except for using the alumina carrier prepared above. As a result, it was found that only one peak was observed.

### Example 3

About 0.7 g of an alumina carrier material (a size of 300 mesh, a particle size of about 45 µm) was packed in a column having a length of 5 cm and an inner diameter of 4.6 mm. The packing pressure adopted was 100 kgf/cm² under constant pressure mode and the packing solvent used was 120mL of water. The resulting column was fitted to a high performance liquid chromatography device LC-9A equipped with an ultraviolet-visible spectrophotometric detector SPD-6AV and then 5.6 mL of a solution obtained by dissolving 5 × 10⁻⁴ moles of palmitic acid in 10 mL of acetone was introduced into the column at a flow rate of 1 mL/min to thus react the acid with the alumina carrier. After the completion of the reaction, the column was washed by passing methanol as an eluting solution for 10 minutes at a flow rate of 1 mL/min, a 50% methanol solution containing uracil, benzene, naphthalene and diphenyl as a sample was loaded to the column, followed by the elution thereof with a 60% methanol-water as an eluting solution passed through the column at a flow rate of 1 mL/min and the detection at a detection wavelength of 254 nm. As has been shown in Fig. 3, the sample was separated into 4 peaks.

### Example 4

There was dissolved 5 × 10⁻⁴ moles of stearic acid in 10 mL of acetone. The resulting solution was admixed with 1.5 g of an alumina carrier material (a size of 300 mesh, a particle size of about 45 µm) and the resulting mixture was stirred at room temperature for 3 hours. After the completion of the reaction, the carrier material thus reacted was washed several times with acetone. Aqueous sodium hydroxide solutions having concentrations of 0.1 mM and 10 mM (10 mL each) were prepared and each aqueous solution was mixed with the alumina carrier treated with stearic acid at room temperature for one hour with stirring. After the mixing step, the foregoing alumina carrier material was dried, about 0.7 g of the carrier material, which had been modified with stearic acid and then the sodium hydroxide aqueous solution, was packed in a column having a length of 5 cm and an inner diameter of 4.6 mm . The packing pressure adopted was 100 kgf/cm² under constant pressure mode and the packing solvent used was 120mL of water. After the completion of the packing, the column was washed by passing methanol as an eluting solution for 10 minutes at a flow rate of 1 mL/min, the column thus washed was fitted to a high performance liquid chromatography device LC-9A equipped with an ultraviolet-visible spectrophotometric detector SPD-6AV, a 50% methanol solution containing uracil, naphthalene and diphenyl as a sample was loaded to the column, followed by the elution thereof with a 60% methanol-water as an eluting solution passed through the column at a flow rate of 1 mL/min and the detection at a detection wavelength of 254 nm. As has been shown in Fig. 4, the sample was separated into 3 peaks. Moreover, it was also found that the separation power was not largely affected by the treatment with sodium hydroxide.

### Example 5

There was dissolved 5 × 10⁻⁴ moles of palmitic acid in 10 mL of acetone. The resulting solution was admixed with 1.5 g of an alumina carrier material (a size of 300 mesh, a particle size of about 45µm) and the resulting mixture was stirred at room temperature for 3 hours. After the completion of the reaction, the carrier material thus reacted was washed several times with acetone. After the drying step, about 0.15 g of the carrier material, which had been modified with palmitic acid, was packed in a column having a length of 1 cm and an inner diameter of 4.6 mm. After the completion of the packing, the column was washed by passing methanol as an eluting solution for 10 minutes at a flow rate of 1 mL/min, the column thus washed was fitted to a high performance liquid chromatography device LC-9A. Then 100 mL of an aqueous solution of diethyl phthalate (4.6 × 10⁻⁷ M) was passed through the column at a flow rate of 1 mL/min to thus adsorb diethyl phthalate on the column. The diethyl phthalate adsorbed on the column was desorbed by passing 1 mL of methanol as a solvent through the column, while monitoring the absorbance observed before and after the desorption at a detection wavelength of 230 nm using an ultraviolet-visible spectrophotometer UV-1600 (available from Shimadzu Corporation, Kyoto, Japan). As a result, it was found that the rate of adsorption of the analyte was almost 100% and that the rate of desorption was 40%.

## Claims

1. A carrier for chromatography or a pre-treating carrier comprising a carrier material consisting essentially of a metal compound, capable of reacting with a carboxylic acid compound or a carrier material, whose surface is coated with the metal compound, and a carboxylic acid compound linked to the surface of the carrier material.

2. The carrier for chromatography or pre-treating carrier of claim 1, wherein the metal compound is at least one member selected from the group consisting of aluminum oxide and silver oxide.

3. The carrier for chromatography or pre-treating carrier of claim 1 or 2, wherein the carrier material is a porous carrier material or a non-porous carrier material.

4. The carrier for chromatography or pre-treating carrier of claim 1 or 2, wherein the carrier material is at least one member selected from the group consisting of aluminum oxide and silver oxide.

5. The carrier for chromatography or pre-treating carrier of any one of claims 1 to 4, wherein the carrier material is silica, glass, cellulose, a ceramic material, carbon or a cross-linked polymeric compound.

6. The carrier for chromatography or pre-treating carrier of any one of claims 1 to 5, wherein the carrier material is a spherical carrier material, a fiber-like carrier material, a crushed piece-like carrier material or the inner surface of a capillary.

7. The carrier for chromatography or pre-treating carrier of any one of claims 1 to 6, wherein the carboxylic acid compound is a fatty acid having 1 to 40 carbon atoms.

8. The carrier for chromatography or pre-treating carrier of claim 7, wherein the fatty acid comprises stearic acid.

9. The carrier for chromatography or pre-treating carrier of any one of claims 1 to 8, wherein the carboxylic acid compound comprises at least two different carboxylic acid compounds.

10. A kit for the preparation of a carrier or a pre-treating carrier for chromatography comprising a carrier material consisting essentially of a metal compound, capable of reacting with a carboxylic acid compound or a carrier material whose surface is coated with the metal compound and the carboxylic acid compound to be linked to the surface of the carrier material.
